(19)

Europäisches
Patentamt
European
Patent Office
Office européen
des brevets

(11) **EP 2 792 546 A1**

(12) **EUROPEAN PATENT APPLICATION**

(43) Date of publication:
**22.10.2014 Bulletin 2014/43**

(21) Application number: **14156444.3**

(22) Date of filing: **25.02.2014**

(51) Int Cl.:
**B60Q 1/068** *(2006.01)* **B62J 6/02** *(2006.01)*
**F21S 8/10** *(2006.01)* **B60Q 1/18** *(2006.01)*

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **17.04.2013 JP 2013086300**

(71) Applicant: **Yamaha Hatsudoki Kabushiki Kaisha
Iwata-shi, Shizuoka 438-8501 (JP)**

(72) Inventors:
• **Kosugi, Makoto
  Iwata-shi, Shizuoka 438-8501 (JP)**

• **Ikeda, Takeshi
  Iwata-shi, Shizuoka 438-8501 (JP)**
• **Kino, Yasuhiko
  Iwata-shi, Shizuoka 438-8501 (JP)**
• **Inoue, Takehiro
  Iwata-shi, Shizuoka 438-8501 (JP)**
• **Ooba, Junichi
  Iwata-shi, Shizuoka 438-8501 (JP)**

(74) Representative: **Grünecker, Kinkeldey,
Stockmair & Schwanhäusser
Leopoldstrasse 4
80802 München (DE)**

(54) **Light unit for use in vehicle that leans into turns and vehicle that leans into turns**

(57) A light unit for use in a vehicle that leans into turns, the light unit comprising:
a fixed part (101) fixed to a vehicle body that is allowed to lean while the vehicle is running;
a main headlight (110,120) provided in the fixed part (101) and configured to be turned on irrespective of a lean angle of the vehicle; and
a sub headlight (130) provided in the fixed part (101) and configured to be turned on in accordance with the lean angle of the vehicle while the vehicle is running, the main headlight (110,120) including a main LED light source (111), a main cut-off line producing part (112), and a main heat sink (113,163), the main cut-off line producing part (112) being configured to produce a cut-off line at the upper side of light emitted from the main LED light source (111), the cut-off line extending in a width direction of the vehicle when the vehicle body is upright, the main heat sink (113,163) being configured to dissipate heat of the main LED light source (111), the sub headlight (130) including a sub LED light source (131), a sub cut-off line producing part (132), and a sub heat sink (113,123), the sub cut-off line producing part (132) being configured to produce a cut-off line at the upper side of light emitted from the sub LED light source (131), the cut-off line extending obliquely when the vehicle body is upright, the sub heat sink (113,123)being configured to dissipate heat of the sub LED light source (131), the main heat sink (113,163) being provided integrally with the main cut-off line producing part (112),

the sub heat sink (113,123) being provided integrally with the sub cut-off line producing part (132), the sub heat sink (113,123) being provided integrally with the main heat sink (113,163) such that heat conduction between the sub heat sink (113,123) and the main heat sink (113,163) is allowed, the main cut-off line producing part (112) and the sub cut-off line producing part (132) being provided in such a manner that the main cut-off line producing part (112) and the sub cut-off line producing part (132) are allowed to move simultaneously under a state where the fixed part (101) is fixed to the vehicle body.

FIG.2

**Description**

The present invention relates to a light unit for use in a vehicle that leans into turns and a vehicle that leans into turns.

In general, in a vehicle that leans into turns (such as saddle-ride type vehicles including motorcycles, three-wheeled motor vehicles, snowmobiles, and ATVs (all terrain vehicles)), when the vehicle corners or turns at an intersection, a rider operates a handlebar and additionally shifts his/her own weight in order to counteract centrifugal force acting on a vehicle body. As a result, the vehicle turns with an attitude (hereinafter, also referred to as "lean attitude") leaning to the inner side of a curve. On the other hand, in a vehicle that does not lean into turns, for example, in an automobile, when the vehicle corners or turns at an intersection, a driver operates a steering wheel and turns with centrifugal force acting on a vehicle body. Therefore, in the vehicle that does not lean into turns, the vehicle body leans to the outer side of a curve due to the centrifugal force.

In the vehicle that leans into turns, the turning is made with an active use of the weight shifting of the rider himself/herself. Therefore, the vehicle body leans to a high degree. In the vehicle that does not lean into turns, the vehicle body leans to the outer side of the curve due to the centrifugal force. The degree of this leaning varies depending on the running speed of the vehicle and the magnitude (radius) of the curve, and this leaning of the vehicle body is not utilized for the turning. In the vehicle that does not lean into turns, it is preferable that the amount of leaning to the outer side of the curve due to the centrifugal force is small.

Thus, at a time of cornering or turning at an intersection, the vehicle that leans into turns causes the vehicle body to lean to the inner side of the curve with a relatively large amount of leaning, while the vehicle that does not lean into turns causes the vehicle body to lean to the outer side of the curve with a relatively small amount of leaning.

Normally, a vehicle is provided with a plurality of lights irrespective of whether or not the vehicle leans into turns. The lights include a light intended mainly to ensure a field of view of a rider of the vehicle and a light intended mainly to enable a surrounding vehicle or the like to recognize the presence of the own vehicle. A headlight is the light intended mainly to ensure the field of view of the rider of the vehicle, and in general, is configured to switch between a high-beam headlight and a low-beam headlight.

The high-beam headlight is also called a running headlight. The high-beam headlight is able to ensure a field of view at a long distance. In order to avoid dazzling a rider of a surrounding vehicle or the like, the high-beam headlight is generally used in a situation where there is no vehicle or the like existing ahead at night. The low-beam headlight is also called a passing headlight. The low-beam headlight produces a cut-off line at the upper side of emitted light, and thereby suppresses dazzling to an oncoming vehicle or the like while the own vehicle is running with an upright attitude, and additionally ensures the visibility over a road surface at a long distance. The cut-off line of light emitted from the low-beam headlight serves as a line (bright-dark limit) that defines the upper limit of the light emitted from the low-beam headlight relative to light emitted from a light source. Therefore, when there is a cut-off line, the brightness largely changes at the cut-off line as a boundary.

When a vehicle that leans into turns is running on a straight road, the cut-off line of the light emitted from the low-beam headlight extends horizontally. When the vehicle that leans into turns is running on a curve; as the lean angle of the vehicle increases, the low-beam headlight illuminates a nearer position on a running lane. Thus, the cut-off line of the light emitted from the low-beam headlight is largely inclined from a horizontal line. As a result, an illumination range in an area inside the curve and ahead in an advancing direction decreases.

Conventionally, therefore, a vehicle has been proposed that includes a LED sub headlight configured to emit light to the upper side of a low-beam headlight in accordance with a cornering signal indicating that the vehicle is running on a curve (see JP 4864562). In JP 4864562, while the vehicle takes a lean attitude when running on a curve, the LED sub headlight is able to emit light to the inner side of the curve to thereby keep ensuring the visibility over a road surface at a long distance. Particularly, the sub headlight of JP 4864562 is turned on in accordance with the cornering signal indicating that the vehicle is running on a curve. Setting an illumination range of the LED sub headlight such that the illumination range of the LED sub headlight compensates for a decrease in an illumination range of a low-beam headlight caused by inclination of the vehicle can maintain the visibility over a road surface at a long distance.

In JP 4864562, in addition to the cut-off line of the light emitted from the low-beam headlight, a cut-off line of light emitted from the LED sub headlight is also produced. Thereby, JP 4864562 achieves both suppression of dazzling to an oncoming vehicle or the like and suppression of decrease in the visibility over a road surface at a long distance while the vehicle is running on a curve.

In JP 4864562, in order to achieve both suppression of dazzling to an oncoming vehicle or the like and suppression of decrease in the visibility over a road surface at a long distance, it is necessary to properly set the positional relationship of the cut-off line of the light emitted from the low-beam headlight and the cut-off line of the light emitted from the LED sub headlight relative to each other.

For this purpose, in JP 4864562, the low-beam headlight that produces the cut-off line and the LED sub headlight that produces the cut-off line are provided in a single lamp body. In this manner, the correctness of the positional relationship of the cut-off line of the light emitted from the low-beam headlight and the cut-off line of the light emitted from the LED sub headlight relative to each other is ensured.

In JP 4864562, however, a plurality of LED sub headlights that produce separate and different cut-off lines are required. These LED sub headlights and the low-beam headlight are integrated as one piece. Therefore, a light unit has a relatively large size. This results in a high likelihood of occurrence of a dimensional error, and it is not easy to manufacture a light unit that satisfies a demanded accuracy of the positional relationship between the cut-off lines.

The present invention is accomplished in view of the problems described above. An object of the present invention is to provide a light unit for use in a vehicle that leans into turns, that is easy to manufacture and that achieves both suppression of dazzling to an oncoming vehicle or the like and suppression of decrease in the visibility over a road surface at a long distance even while the vehicle that leans into turns is running on a curve.

According to the present invention said object is solved by a light unit for use in a vehicle that leans into turns having the features of independent claim 1. Preferred embodiments are laid down in the dependent claims.

The present invention also provides a vehicle that leans into turns and that includes the light unit.

To solve the problems described above, the present teaching adopts the following configurations.

(1) A light unit for use in a vehicle that leans into turns, the light unit including:

a fixed part fixed to a vehicle body that is allowed to lean while the vehicle is running;
a main headlight provided in the fixed part and configured to be turned on irrespective of a lean angle of the vehicle; and
a sub headlight provided in the fixed part and configured to be turned on in accordance with the lean angle of the vehicle while the vehicle is running,
the main headlight including a main LED light source, a main cut-off line producing part, and a main heat sink, the main cut-off line producing part being configured to produce a cut-off line at the upper side of light emitted from the main LED light source, the cut-off line extending in a width direction of the vehicle when the vehicle body is upright, the main heat sink being configured to dissipate heat of the main LED light source,
the sub headlight including a sub LED light source, a sub cut-off line producing part, and a sub heat sink, the sub cut-off line producing part being configured to produce a cut-off line at the upper side of light emitted from the sub LED light source, the cut-off line extending obliquely when the vehicle body is upright, the sub heat sink being configured to dissipate heat of the sub LED light source,
the main heat sink being provided integrally with the main cut-off line producing part,
the sub heat sink being provided integrally with the sub cut-off line producing part,
the sub heat sink being provided integrally with the main heat sink such that heat conduction between the sub heat sink and the main heat sink is allowed,
the main cut-off line producing part and the sub cut-off line producing part being provided in such a manner that the main cut-off line producing part and the sub cut-off line producing part are allowed to move simultaneously under a state where the fixed part is fixed to the vehicle body.

In the configuration of (1), the sub heat sink, which is for dissipating heat of the sub LED light source, has thermal conductivity and a relatively high rigidity. The main heat sink, which is for dissipating heat of the main LED light source, has thermal conductivity and a relatively high rigidity. Thus, both of the sub heat sink and the main heat sink have a relatively high rigidity, and therefore a dimensional error is less likely to occur during a manufacturing process of them. The sub cut-off line producing part is manufactured with a good accuracy because the sub cut-off line producing part is integrated with the sub heat sink having a relatively high rigidity. The main cut-off line producing part is manufactured with a good accuracy because the main cut-off line producing part is integrated with the main heat sink having a relatively high rigidity. Furthermore, the sub heat sink and the main heat sink, both of which have a relatively high rigidity, are provided integrally with each other such that heat conduction therebetween is allowed. Therefore, the sub heat sink and the main heat sink can be manufactured with a high accuracy.

Thus, the configuration of (1) enables the main cut-off line producing part and the sub cut-off line producing part to be manufactured with a good accuracy together with the sub heat sink and the main heat sink. This can provide a light unit that is easy to manufacture and that achieves both suppression of dazzling to an oncoming vehicle or the like and suppression of decrease in the visibility over a road surface at a long distance even while the vehicle that leans into turns is running on a curve.

(2) The light unit according to (1), wherein
the light unit includes a movement mechanism, the movement mechanism being configured to simultaneously move the main cut-off line producing part, the sub cut-off line producing part, the main heat sink, and the sub heat sink relative to the vehicle body under a state where the fixed part is fixed to the vehicle body,

the movement mechanism has a plurality of position set points for setting positions, after the movement, of the main cut-off line producing part, the sub cut-off line producing part, the main heat sink, and the sub heat sink.

In the configuration of (2), the main cut-off line producing part, the sub cut-off line producing part, the main heat sink, and the sub heat sink are movable integrally. This allows the distance between each of the plurality of position set points to be increased. Accordingly, the accuracy of adjustment of the main cut-off line producing part and the sub cut-off line producing part can be improved.

(3) The light unit according to (2), wherein

at least one of the plurality of position set points is provided in a portion that is provided integrally with the sub heat sink such that heat conduction with the sub heat sink is allowed.

In the configuration of (3), the position set point is provided in a portion having a relatively high rigidity. Thus, the position adjustment can be performed in a portion having a relatively high rigidity. This makes the adjustment easy to perform, thus enabling the adjustment to be performed more accurately.

(4) The light unit according to (2) or (3), wherein

in a front elevational view of the light unit, at least one of the plurality of position set points is located closest to, among transparent surfaces of lights included in the light unit, a transparent surface of the sub headlight.

In the configuration of (4), the position set point is provided at a position close to the sub headlight. Thus, the position adjustment can be performed at a position close to the sub headlight. This makes the adjustment easy to perform, thus enabling the adjustment to be performed more accurately.

(5) The light unit according to any one of (2) to (4), wherein

in a front elevational view of the light unit, at least one of the plurality of position set points overlaps a transparent surface of the sub headlight.

In the configuration of (5), the position set point is provided behind the sub headlight. Thus, the position adjustment can be performed at a position close to the sub headlight. This makes the adjustment easy to perform, thus enabling the adjustment to be performed more accurately.

(6) The light unit according to any one of (2) to (5), wherein

the plurality of position set points include a reference point serving as a reference for movement and at least one movement point that is movable relative to the reference point,

in a front elevational view of the vehicle, at least one straight line among straight lines connecting the reference point to the movement points overlaps the main heat sink.

In the configuration of (6), the straight line (the axis of movement of the main heat sink) connecting the reference point to the movement point overlaps the main heat sink. Therefore, at a time of position adjustment, the main heat sink moves over a small range. This allows a reduction in a space for ensuring a range of movement of the main heat sink. As a result, the light unit can be downsized.

(7) A vehicle that leans into turns,

the vehicle including the light unit according to any one of (1) to (6).

The configuration of (7) achieves both suppression of dazzling to an oncoming vehicle or the like and suppression of decrease in the visibility over a road surface at a long distance even while the vehicle that leans into turns is running on a curve.

[EFFECTS OF THE TEACHING]

The present teaching is able to provide a light unit for use in a vehicle that leans into turns, that is easy to manufacture and that achieves both suppression of dazzling to an oncoming vehicle or the like and suppression of decrease in the visibility over a road surface at a long distance even while the vehicle that leans into turns is running on a curve.

These and other objects, features, aspects and advantages of the present teaching will become more apparent to those skilled in the art from the following detailed description, which, taken in conjunction with the accompanying drawings, discloses some embodiments of the present teaching.

[BRIEF DESCRIPTION OF THE DRAWINGS]

[FIG. 1] A front elevational view schematically showing a motorcycle including a light unit according to a first embodiment.

[FIG. 2] A front elevational view schematically showing the light unit shown in FIG. 1.

[FIG. 3] A cross-sectional view schematically showing a cross-section of the light unit shown in FIG. 2 as taken along the line A-A.

[FIG. 4] A block diagram showing a basic configuration concerning the light unit shown in FIG. 1.

[FIG. 5] A front elevational view schematically showing optical axes and cut-off lines of light beams from a light unit of a motorcycle in an upright state.

[FIG. 6] (a) is a diagram schematically showing a screen light distribution in a case where the lean angle of the motorcycle takes a reference value $K_1$; (b) is a diagram schematically showing a screen light distribution in a case where the lean angle of the motorcycle takes a reference value $K_2$; and (c) is a diagram schematically showing a screen light distribution in a case where the lean angle of the motorcycle takes a reference value $K_3$.

[FIG. 7] A front elevational view schematically showing a light unit according to a second embodiment.

[FIG. 8] A front elevational view schematically showing a light unit according to a third embodiment.

[FIG. 9] A front elevational view schematically showing a light unit according to a fourth embodiment.

[EMBODIMENTS FOR CARRYING OUT THE INVENTION]

The present inventors have conducted intensive studies in view of the problems described above, and focused on the fact that adoption of an LED light source makes it necessary to provide a heat sink for dissipating heat of the LED light source. Since heat dissipation properties are demanded of the heat sink, the heat sink is made of a material having a relatively high rigidity. As a result, the present inventors have found the heat sink can be manufactured with a relatively high accuracy, and therefore a dimensional error is less likely to occur.

Accordingly, the present inventors have found out that a cut-off line producing part and a heat sink are provided in the following manner. That is, a main cut-off line producing part is provided integrally with a main heat sink. This can ensure the accuracy in manufacturing the main cut-off line producing part because the main heat sink is manufactured accurately. Additionally, a sub cut-off line producing part is provided integrally with a sub heat sink. This can ensure the accuracy in manufacturing the sub cut-off line producing part because the sub heat sink is manufactured accurately. Moreover, the main heat sink and the sub heat sink are provided integrally with each other such that heat conduction is allowed between the main heat sink and the sub heat sink. Therefore, the main heat sink and the sub heat sink are integrally provided in an accurate manner. As a result, the main cut-off line producing part and the sub cut-off line producing part are integrally provided in an accurate manner Thus, the accuracy of the positional relationship of the main cut-off line producing part and the sub cut-off line producing part relative to each other is ensured at a time of manufacturing. Furthermore, the main cut-off line producing part and the sub cut-off line producing part are able to move simultaneously under a state where a fixed part is fixed to a vehicle body. This enables cut-off lines having different angles relative to the vehicle body to be adjusted simultaneously.

In this manner, focusing on the point that a heat sink, which is required in a case of adopting an LED light source that can easily produce a cut-off line, has a relatively high rigidity, the present inventors have found out that the accuracy of the positional relationship of the main cut-off line producing part and the sub cut-off line producing part relative to each other can be ensured by using the rigidity of the heat sink.

A light unit according to the present teaching achieves both suppression of dazzling to an oncoming vehicle or the like and suppression of decrease in the visibility over a road surface at a long distance even while the vehicle that leans into turns is running on a curve. The light unit according to the present teaching is easy to manufacture, because manufacturing accuracy can be obtained easily.

<First Embodiment>

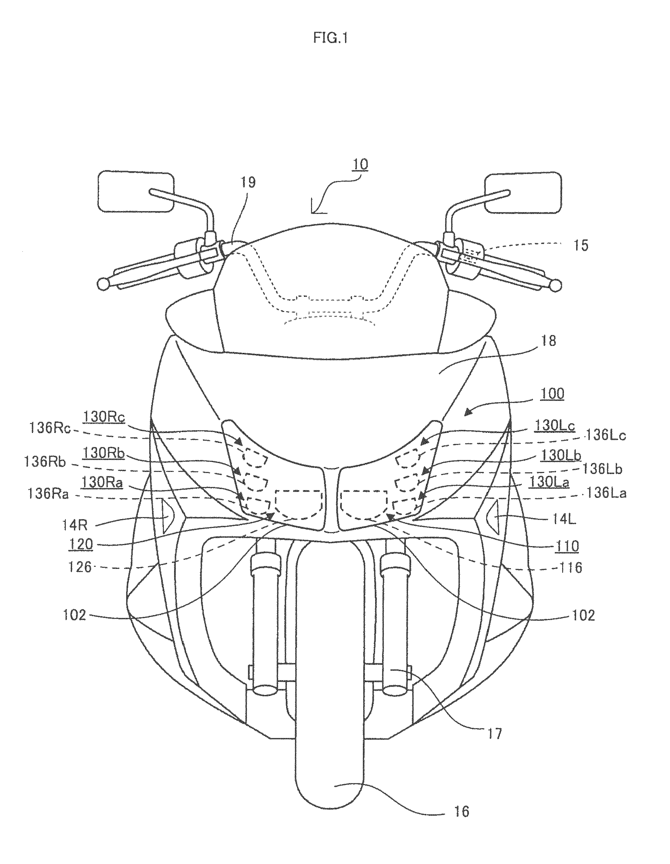

FIG. 1 is a front elevational view schematically showing a motorcycle including a light unit according to a first embodiment.

A motorcycle 10 is an example of a vehicle that leans into turns according to the present teaching. In the present teaching, no particular limitation is put on the vehicle that leans into turns. For example, saddle-ride type vehicles including motorcycles, three-wheeled motor vehicles, snowmobiles, and ATVs (all terrain vehicles) may be mentioned. In the following description, the terms "front" and "back" are terms with respect to an advancing direction of the vehicle, the terms "up" and "down" are terms with respect to the vertical direction of the vehicle, and the terms "right" and "left" are terms with respect to a rider.

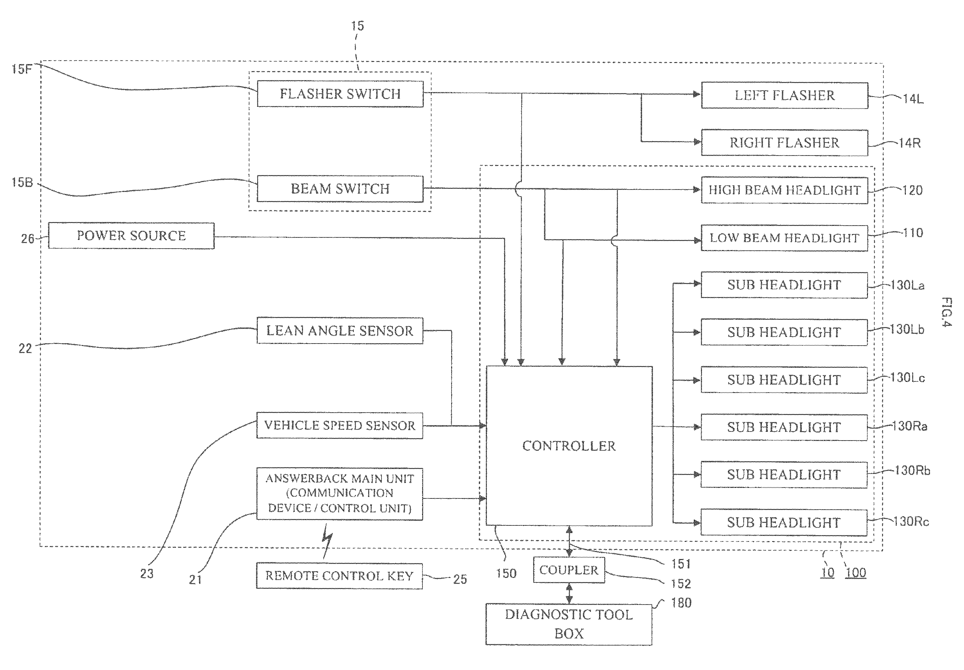

The motorcycle 10 includes a handlebar 19. An operation switch 15 is provided in a left portion of the handlebar 19 with respect to a width direction of the vehicle. The operation switch 15 includes a beam switch 15B and a flasher switch 15F (see FIG. 4). A steering shaft (not shown) is fixed to a center portion of the handlebar 19 with respect to the width direction of the vehicle. The steering shaft extends downward through a headpipe (not shown). A front fork 17 is provided at a lower end of the steering shaft. A front wheel 16 is rotatably supported at the lower end of the front fork 17. The headpipe is a member constituting a vehicle body frame. In the present teaching, no particular limitation is put on the vehicle body frame, and a conventionally known configuration is adoptable. The vehicle body frame corresponds to the vehicle body. The handlebar 19 corresponds to the vehicle body.

A front cover 18 covers a front part of the headpipe having the steering shaft passing therethrough. The motorcycle 10 includes a light unit 100. The light unit 100 is arranged inside the front cover 18. In a front surface of the front cover 18, an outer cover 102 of the light unit 100 is exposed. The front cover 18 corresponds to the vehicle body.

The outer cover 102 is transparent and made of, for example, a resin. The light unit 100 includes a high-beam headlight 120 and a low-beam headlight 110. The high-beam headlight is also called a running headlight. The low-beam headlight is also called a passing headlight. The high-beam headlight 120 illuminates an area ahead of the motorcycle 10 at a height equal to or above a horizontal plane of the light unit 100. The low-beam headlight 110 illuminates an area ahead of the motorcycle 10 at a height below the horizontal plane of the light unit 100.

The low-beam headlight 110 and the high-beam headlight 120 are turned on irrespective of the lean angle of the motorcycle 10. The high-beam headlight 120 and the low-beam headlight 110 are configured such that only one of them is turned on in accordance with an operation that the rider performs on the beam switch 15B (see FIG. 4). The low-beam headlight 110 and the high-beam headlight 120 correspond to the main headlight.

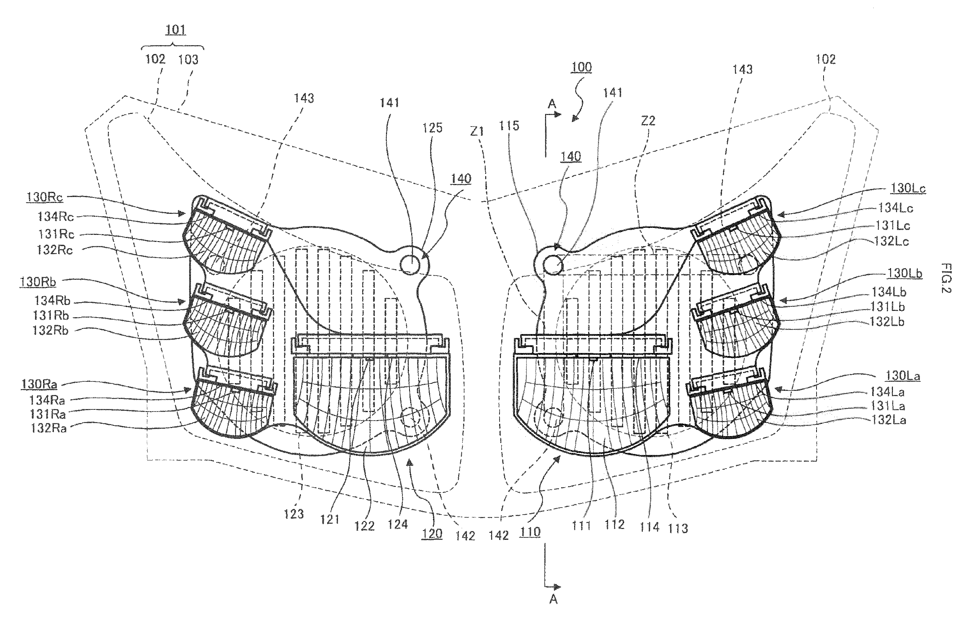

When the low-beam headlight 110 is turned on, a transparent surface 116 of the low-beam headlight 110 appears bright. The transparent surface 116 is recognized as the low-beam headlight 110 by a viewer. When seen from the front side of the motorcycle 10, the shape of the transparent surface 116 is substantially the same as the shape of a low-beam reflector 112 in a front elevational view (see FIG. 2).

When the high-beam headlight 120 is turned on, a transparent surface 126 of the high-beam headlight 120 appears bright. The transparent surface 126 is recognized as the high-beam headlight 120 by a viewer. When seen from the front side of the motorcycle 10, the shape of the transparent surface 126 is substantially the same as the shape of a high-beam reflector 122 in a front elevational view (see FIG. 2).

The light unit 100 includes a plurality of sub headlights 130 (130La to 130Lc, 130Ra to 130Rc). The light unit 100 is a light unit of variable light distribution type, whose light distribution varies in accordance with the lean angle. Each sub headlight 130 is turned on in accordance with the lean angle while the vehicle is running. Each sub headlight 130 is configured such that its optical axis, light source, and reflector are not moved in accordance with the lean angle.

The sub headlights 130L (130La to 130Lc) and the sub headlights 130R (130Ra to 130Rc) are provided at both sides with respect to the width direction of the vehicle. In the description herein, the sub headlight 130L represents a sub headlight that illuminates an area ahead and to the left of the motorcycle 10. The sub headlight 130R represents a sub headlight that illuminates an area ahead and to the right of the motorcycle 10.

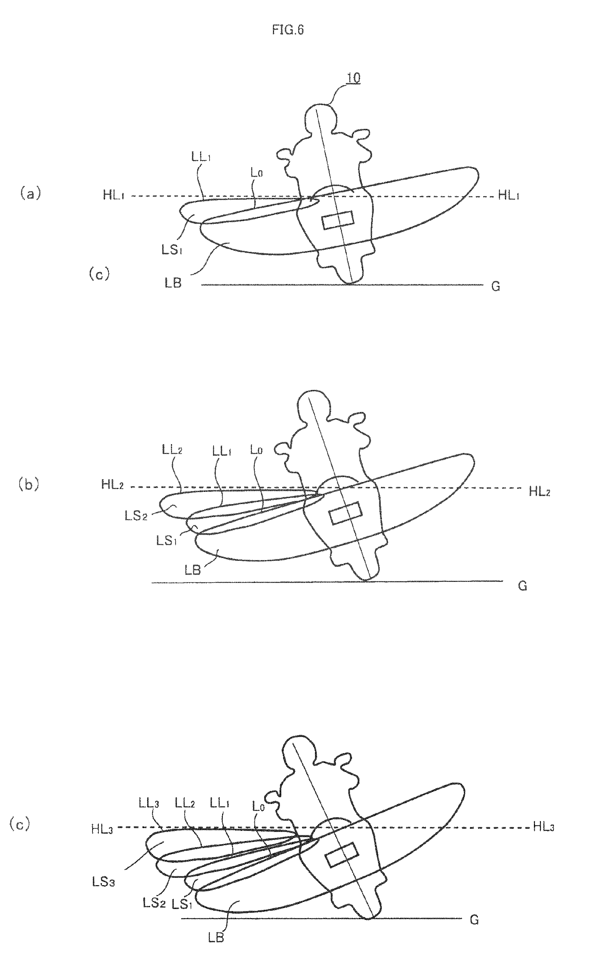

The sub headlights 130L (130La to 130Lc) are vertically arranged at the outer side of the low-beam headlight 110 with respect to the width direction of the vehicle. The sub headlights 130La to 130Lc, which are arranged in this order from the lower side, are turned on sequentially from the lowermost sub headlight in accordance with an increase in the lean angle. The sub headlights 130L (130La to 130Lc) illuminate an area ahead and left-outward of the vehicle with respect to the width direction of the vehicle. Illumination ranges of the sub headlights 130L (130La to 130Lc) are located in order from the center toward the upper left with respect to the width direction of the vehicle, and the illumination ranges overlap one another (see FIG. 6). The sub headlights 130R and the sub headlights 130L are substantially laterally symmetrical. In the description herein, the sub headlights 130La to 130Lc are turned on in the order of 130La, 130Lb, and 130Lc in accordance with an increase in the lean angle. The same applies to the sub headlights 130Ra to 130Rc.

When the sub headlights 130 (130La to 130Lc, 130Ra to 130Rc) are turned on, transparent surfaces 136 (136La to 136Lc, 136Ra to 136Rc) appear bright. The transparent surface 136 is recognized as the sub headlight 130 by a viewer. When seen from the front side of the motorcycle 10, the shape of the transparent surface 136 is substantially the same as the shape of a sub reflector 132 in a front elevational view (see FIG. 2).

The plurality of sub headlights 130L (130La to 130Lc) arranged to the left with respect to the width direction of the vehicle illuminate an area ahead of and left lateral to the motorcycle 10. The plurality of sub headlights 130R (130Ra to 130Rc) arranged to the right with respect to the width direction of the vehicle illuminate an area ahead of and right lateral to the motorcycle 10. The sub headlight 130 may illuminate an area at the same side (for example, the left side) as the side (for example, the left side) where the sub headlight 130 is arranged with respect to the width direction of the vehicle, or alternatively may illuminate an area at the side (for example, the right side) opposite to the side where the sub headlight 130 is arranged with respect to the width direction of the vehicle.

Flashers 14L and 14R, serving as direction indicators, are provided at both sides of the motorcycle 10 with respect to the width direction of the vehicle. The flashers 14L and 14R are configured such that either one of them is turned on in accordance with an operation that the rider performs on the flasher switch 15F (see FIG. 4). In the present teaching, no particular limitation is put on the positional relationship between the sub headlight and the flasher.

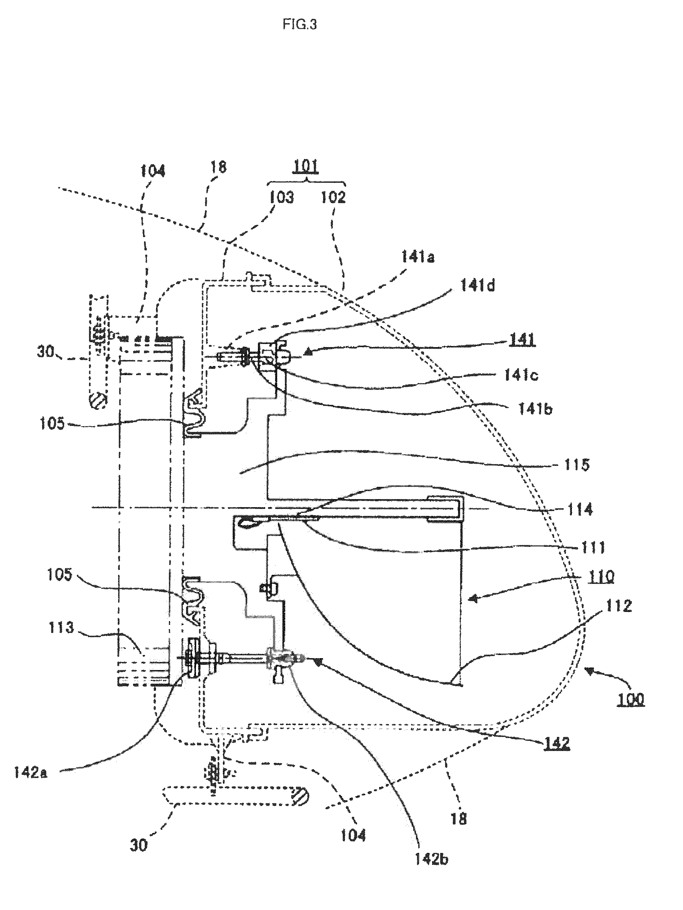

FIG. 2 is a front elevational view schematically showing the light unit 100 of FIG. 1. FIG. 3 is a cross-sectional view schematically showing a cross-section of the light unit of FIG. 1 as taken along the line A-A.

As shown in FIG. 2, the light unit 100 includes a cover 101 (fixed part). The cover 101 constitutes a lamp body. The cover 101 extends over opposite sides with respect to the width direction of the vehicle. The cover 101 includes an outer cover 102 and a rear cover 103. The outer cover 102 is transparent, and exposed on a front surface of the motorcycle 10 (see FIG. 1). The rear cover 103 has an opening opened in a front surface thereof. The outer cover 102 is arranged in the opening. The outer cover 102 is provided in each of the right and left sides with respect to the width direction of the vehicle. The outer cover 102 and the rear cover 103 are combined into the cover 101. As shown in FIG. 3, an outer surface of the rear cover 103 has an attachment part 104 for fixing the light unit 100 to the headpipe (not shown) that serves as the vehicle body frame. The headpipe (not shown) has a stay 30 for supporting the light unit 100. The attachment part 104 is attached to the stay 30, and thereby the light unit 100 is fixed to the headpipe serving as the vehicle body frame. A space for the storage of the low-beam headlight 110, the high-beam headlight 120, and the sub headlights 130 is formed within the cover 101 (see FIG. 3).

In the space provided within the cover 101, as shown in FIG. 2, the low-beam headlight 110 and the sub headlights 130L (130La to 130Lc) are arranged at one side (left side) with respect to the width direction of the vehicle.

As shown in FIGS. 2 and 3, the low-beam headlight 110 includes a low-beam LED light source 111, a low-beam reflector 112, a low-beam heat sink 113, a low-beam LED substrate 114, and a low-beam heat dissipation plate 115.

The low-beam LED light source 111 is provided on the low-beam LED substrate 114. The low-beam reflector 112 has a shape that surrounds the low-beam LED light source 111 except for a region facing the vehicle front side. An inner surface (a surface that receives light emitted from the low-beam LED light source 111) of the low-beam reflector 112 is configured to reflect light emitted from the low-beam LED light source 111. A surface (a surface on which the low-beam LED light source 111 is mounted) of the low-beam LED substrate 114 is configured to reflect light emitted from the low-beam LED light source 111, and constitutes a part of the low-beam reflector 112.

The light emitted from the low-beam LED light source 111 is directly emitted to the vehicle front side without being reflected by the low-beam reflector 112, or emitted to the vehicle front side after being reflected by the low-beam reflector 112. The light reflected by the low-beam reflector 112 is emitted to the vehicle front side in such a manner that upper and lower parts of the light cross or do not cross each other with respect to the vertical direction. Light emitted toward the vehicle front side (toward a region not surrounded by the low-beam reflector 112) in this manner is regarded as the light emitted from the low-beam headlight 110.

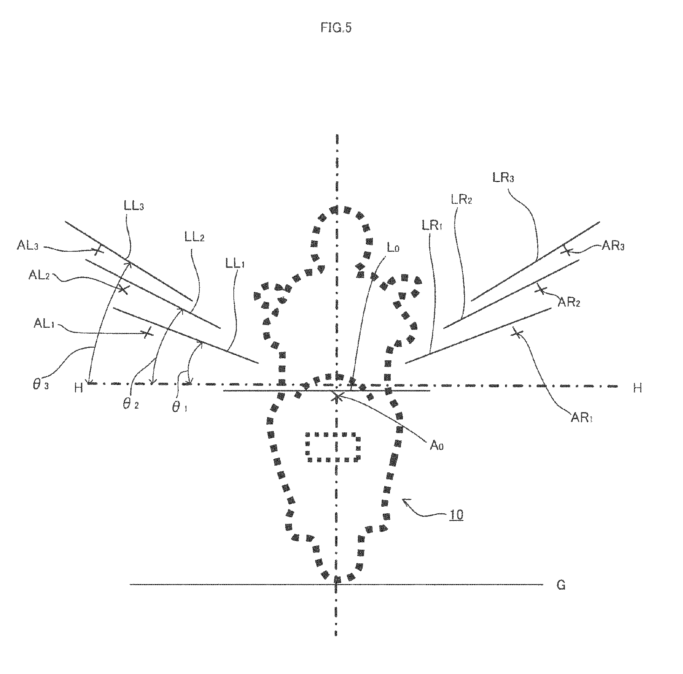

A light distribution of the low-beam headlight 110 is formed by the low-beam reflector 112. The low-beam reflector 112 has a shape that partially blocks the light emitted from the low-beam LED light source 111. For example, in a case where the upper and lower parts of light reflected by the reflector cross each other with respect to the vertical direction when the reflected light is emitted to the vehicle front side, the lower part of the reflected light is blocked. In a case where the upper and lower parts of light reflected by the reflector do not cross each other with respect to the vertical direction, the upper part of the reflected light is blocked. As a result of blocking of light by the low-beam reflector 112, a cut-off line $L_0$ is formed above the light emitted from the low-beam headlight 110. The cut-off line $L_0$ extends in the width direction of the vehicle when the vehicle body is upright (FIGS. 5 and 6). No particular limitation is put on which part of the light emitted from the low-beam LED light source 111 is to be blocked by the low-beam reflector 112. It suffices that the low-beam reflector 112 causes the cut-off line $L_0$ to be formed above the light emitted from the low-beam headlight 110 (above an illumination range in a screen light distribution). The low-beam reflector 112 corresponds to the main cut-off line producing part. The light emitted from the low-beam headlight 110 is emitted to the vehicle front side through the outer cover 102.

As shown in FIG. 2, each of the sub headlights 130L (130La to 130Lc) includes a sub LED light source 131L, a sub reflector 132L, and a sub LED substrate 134L. The sub headlight is not particularly limited. Instead of a sub headlight including a reflector as illustrated in this embodiment, for example, a sub headlight including a projection lens configured to directly project LED light is also adoptable. No particular limitation is put on a sub headlight including a reflector, and examples thereof include a sub headlight of projector type and a sub headlight of parabola type.

The sub LED light source 131 L is provided on the sub LED substrate 134L. The sub reflector 132L has a shape that surrounds the sub LED light source 131 L except for a region facing the vehicle front side. An inner surface (a surface that receives light emitted from the sub LED light source 131 L) of the sub reflector 132L is configured to reflect light emitted from the sub LED light source 131 L. A surface of the sub LED substrate 134L is configured to reflect light emitted from the sub LED light source 131L, and constitutes a part of the sub reflector 132L.

The light emitted from the sub LED light source 131 L is directly emitted to the vehicle front side without being reflected by the sub reflector 132L, or emitted to the vehicle front side after being reflected by the sub reflector 132L. Light emitted through the vehicle front side (through a region not surrounded by the sub reflector 132L) in this manner is regarded as the light emitted from the sub headlight 130L.

A light distribution of the sub headlight 130L is formed by the sub reflector 132L. Each of the sub reflectors 132La to 132Lc has a shape that partially blocks the light emitted from each of the sub LED light sources 131La to 131Lc. The sub reflectors 132La to 132Lc form cut-off lines $LL_1$, $LL_2$, and $LL_3$ above the light emitted from the sub LED light sources 131La to 131Lc, respectively. The cut-off lines $LL_1$, $LL_2$, and $LL_3$ extend in the width direction of the vehicle when the vehicle body is upright (FIGS. 5 and 6). The sub reflector 132L corresponds to the sub cut-off line producing part. The angles of the cut-off lines $LL_1$, $LL_2$, and $LL_3$ are different from the angle of the cut-off line $L_0$. The angles of the cut-off lines $LL_1$, $LL_2$, and $LL_3$ are different from one another. The light emitted from the sub headlight 130L is emitted to the vehicle front side through the outer cover 102.

The low-beam heat dissipation plate 115 is a single plate-like member. The low-beam heat dissipation plate 115 is arranged in the cover 101 with a surface of the low-beam heat dissipation plate 115 facing the vehicle front side. The low-beam LED light source 111, the low-beam reflector 112, the low-beam LED substrate 114, the sub LED light source 131L, the sub reflector 132L, and the sub LED substrate 134L are located at the front side of the low-beam heat dissipation plate 115. The low-beam LED substrate 114 having the low-beam LED light source 111 mounted thereon, and the low-beam reflector 112; and the sub LED substrate 134L having the sub LED light source 131 L mounted thereon, and the sub reflector 132L are supported on the low-beam heat dissipation plate 115. Thus, the low-beam heat dissipation plate 115 serves also as a heat dissipation plate of the sub headlight 130L. In other words, the low-beam heat dissipation plate 115 is integrated with the heat dissipation plate of the sub headlight 130L.

The low-beam heat sink 113 is located at the back side of the low-beam heat dissipation plate 115. The low-beam heat sink 113 is exposed to the outside of the cover 101 through an opening provided at the back of the cover 101 (see FIG. 3). A space between the cover 101 and the low-beam heat sink 113 is sealed with a rubber boot part 105 (waterproof mechanism). The low-beam heat sink 113 is integrated with the low-beam heat dissipation plate 115. Thus, the low-beam heat sink 113 serves also as a heat sink (sub heat sink) of the sub headlight 130L. In other words, the low-beam heat sink 113 is integrated with the heat sink (sub heat sink) of the sub headlight 130L.

In the light unit 100, as described above, the low-beam heat sink 113 (main heat sink) is integrated with the low-beam reflector 112 (main cut-off line producing part). The low-beam heat sink 113, which serves also as the sub heat sink, is integrated with the sub reflector 132L (sub cut-off line producing part). Since the low-beam heat sink 113 serves also as the sub heat sink, heat conduction between the low-beam heat sink 113 and the sub heat sink is allowed. In other words, the low-beam heat sink 113 includes a part having a heat capacity for dissipating heat of the low-beam headlight 110 and a part having a heat capacity for dissipating heat of the sub headlight 130L, and heat conduction between these parts is allowed.

The low-beam reflector 112 and the sub reflector 132L are made of, for example, a resin. The low-beam heat sink 113 and the low-beam heat dissipation plate 115 are made of, for example, a metal (e.g., aluminum). The thermal conductivity of the low-beam heat sink 113 and the low-beam heat dissipation plate 115 is higher than that of the low-beam reflector 112 and the sub reflector 132L. The rigidity of the low-beam heat sink 113 and the low-beam heat dissipation plate 115 is higher than that of the low-beam reflector 112 and the sub reflector 132L. Therefore, heat generated in the low-beam LED light source 111, and the low-beam LED substrate 114; and the sub LED light source 131L, and the sub LED substrate 134L is transferred to the low-beam heat sink 113 via the low-beam heat dissipation plate 115, and then dissipated from the low-beam heat sink 113.

In the low-beam heat dissipation plate 115, a reference point 141, a vertical movement point 142, and a widthwise movement point 143 are set. The reference point 141, the vertical movement point 142, and the widthwise movement point 143 correspond to the position set points, and constitute a movement mechanism 140. As shown in FIGS. 2 and 3, the reference point 141 and the vertical movement point 142 line up in the vertical direction. As shown in FIG. 2, the reference point 141 and the widthwise movement point 143 line up in the width direction of the vehicle.

As shown in FIG. 3, a boss portion 141 a that protrudes from the rear cover 103 toward the vehicle front side is provided at the reference point 141. A threaded shaft 141 b is received in and fixed to the boss portion 141 a. The threaded shaft 141 b has a ball portion 141 c provided at the vehicle front side. A ball bearing portion 141 d is provided at the reference point 141. The ball bearing portion 141 d is arranged on a back surface of the low-beam heat dissipation plate 115. The ball portion 141c is fitted in the ball bearing portion 141 d. The ball portion 141 c is loosely fitted and therefore allowed to freely move within the ball bearing portion 141d. Thus, at the reference point 141, the low-beam heat dissipation plate 115 is supported on the cover 101 in such a manner that movement of the low-beam heat dissipation plate 115 at the reference point 141 is limited and that three-dimensional movement of the low-beam heat dissipation plate 115 (a change in the orientation of the low-beam heat dissipation plate 115) is allowed.

As shown in FIG. 3, an aiming bolt 142a is provided at the vertical movement point 142. The aiming bolt 142a is screwed into a threaded hole of the rear cover 103 in the direction from the vehicle back side toward the vehicle front side. An aiming nut 142b is also provided at the vertical movement point 142. The aiming nut 142b is arranged on the low-beam heat dissipation plate 115. An end portion of the aiming bolt 142a at the vehicle front side is screwed into the aiming nut 142b in the direction from the vehicle back side toward the vehicle front side.

Tightening the aiming bolt 142a to move the aiming bolt 142a toward the vehicle front side causes the low-beam heat dissipation plate 115 to move toward the vehicle front side at the vertical movement point 142. As a result, the low-beam heat dissipation plate 115 is tilted about the reference point 141, so that a surface of the low-beam heat dissipation plate 115 at the vehicle front side faces upward. Loosening the aiming bolt 142a to move the aiming bolt 142a toward the vehicle back side causes the low-beam heat dissipation plate 115 to move toward the vehicle back side at the vertical movement point 142. As a result, the low-beam heat dissipation plate 115 is tilted about the reference point 141, so that the surface of the low-beam heat dissipation plate 115 at the vehicle front side faces downward. In this manner, at the vertical movement point 142, the low-beam heat dissipation plate 115 is allowed to move such that the orientation of the low-beam heat dissipation plate 115 is changed in the vertical direction.

The widthwise movement point 143 is structured in the same manner as the vertical movement point 142, and therefore a description of the structure of the widthwise movement point 143 is omitted herein. At the widthwise movement point 143, the low-beam heat dissipation plate 115 is allowed to move such that the orientation of the low-beam heat dissipation plate 115 is changed in the width direction of the vehicle.

By means of the reference point 141, the vertical movement point 142, and the widthwise movement point 143, the low-beam heat dissipation plate 115 is three-dimensionally moved. This enables the low-beam reflector 112 integrated with the low-beam heat dissipation plate 115, the sub reflector 132L, and the low-beam heat sink 113 serving also as the sub heat sink, to be moved simultaneously relative to the headpipe (vehicle body) under a state where the cover 101 (fixed part) is fixed to the headpipe (vehicle body). The reference point 141, the vertical movement point 142, and the widthwise movement point 143 correspond to the plurality of position set points for setting positions, after the movement, of the low-beam reflector 112, the sub reflector 132L, and the low-beam heat sink 113 serving also as the sub heat sink. In other words, the light unit 100 is provided with the movement mechanism 140 including a plurality of position set points (the reference point 141, the vertical movement point 142, and the widthwise movement point 143). The movement mechanism 140 is configured to, when the motorcycle 10 is stopped, change the orientation of the sub headlight 130L to thereby move the cut-off line LL of the light emitted from the sub headlight 130L. The movement mechanism 140 is configured to move the cut-off line LL produced by the sub headlight 130L under a state where the motorcycle 10 is kept stopped (with the motorcycle 10 being not inclined). The movement mechanism 140 is configured to move the cut-off line LL produced by the sub headlight 130L substantially without changing the brightness of the sub headlight 130L. The movement mechanism 140 does not cause the cut-off line LL produced by the sub headlight 130L to move in accordance with a change in the inclination angle of the motorcycle 10. In this embodiment, one reference point and two movement points are provided, but the present teaching is not limited to this example. All of the plurality of position set points may be movement points. It suffices that the number of position set points is two or more. The number of position set points is preferably three or more, and more preferably three. No particular limitation is put on each of the position set points 141 to 143. A conventionally known structure is adoptable therefor.

In the light unit 100, the low-beam reflector 112 integrated with the low-beam heat dissipation plate 115, the sub reflector 132L, and the low-beam heat sink 113 serving also as the sub heat sink are moved at the plurality of position set points (the reference point 141, the vertical movement point 142, and the widthwise movement point 143). Thus, the distance between the reference point 141 and the vertical movement point 142 and the distance between the reference point 141 and the widthwise movement point 143 are set relatively long. This can improve the accuracy of adjustment of the low-beam reflector 112 and the sub reflector 132L.

The plurality of position set points (the reference point 141, the vertical movement point 142, and the widthwise movement point 143) are provided on the low-beam heat dissipation plate 115. The low-beam heat dissipation plate 115 is a part integrated with the low-beam heat sink 113 such that heat conduction to and from the low-beam heat sink 113 serving also as the sub heat sink is allowed. The low-beam heat dissipation plate 115 has a relatively high rigidity. Thus, adjustment of positions can be performed by means of the low-beam heat dissipation plate 115 having a relatively high rigidity.

Among the transparent surfaces 116, 126, and 136 (see FIG. 1) of the lights 110, 120, and 130 included in the light unit 100, the transparent surface 136Lc (sub reflector 132Lc) of the sub headlight 130Lc is located closest to the widthwise movement point 143. More specifically, the widthwise movement point 143 overlaps the transparent surface 136Lc of the sub headlight 130Lc in a front elevational view of the light unit 100. This enables more accurate adjustment of positions. Here, the front elevational view of the light unit 100 means a view of the light unit 100 when seen in the same direction as the direction in which the motorcycle 10 (vehicle that leans into turns) is seen in a front elevational view thereof.

A straight line Z1 connecting the reference point 141 to the vertical movement point 142 and a straight line Z2 connecting the reference point 141 to the widthwise movement point 143 serve as axis lines on which the low-beam heat sink 113 is moved. In a front elevational view of the light unit 100, as shown in FIG. 2, the axis line Z (Z1, Z2) overlaps the low-beam heat sink 113. This allows a reduction in a space for ensuring a range of movement of the low-beam heat sink 113. As a result, the light unit 100 can be downsized. Since the range of movement of the low-beam heat sink 113 is narrowed, the rubber boot part 105 (waterproof mechanism) can be downsized.

In the space provided within the cover 101, as shown in FIG. 2, the high-beam headlight 120 and the sub headlights 130R (130Ra to 130Rc) are arranged at the other side (right side) with respect to the width direction of the vehicle. Each element of the sub headlight 130R has the same configuration as that of the sub headlight 130L, and therefore a description thereof is omitted herein.

As shown in FIG. 2, the high-beam headlight 120 includes a high-beam LED light source 121, a high-beam reflector 122, a high-beam heat sink 123, a high-beam LED substrate 124, and a high-beam heat dissipation plate 125.

The high-beam LED light source 121 is provided on the high-beam LED substrate 124. The high-beam reflector 122 has a shape that surrounds the high-beam LED light source 121 except for a region facing the vehicle front side. An inner surface (a surface that receives light emitted from the high-beam LED light source 121) of the high-beam reflector 122 is configured to reflect light emitted from the high-beam LED light source 121. A surface (a surface on which the high-beam LED light source 121 is mounted) of the high-beam LED substrate 124 is configured to reflect light emitted from the high-beam LED light source 121, and constitutes a part of the high-beam reflector 122.

A light distribution of the high-beam headlight 120 is formed by the high-beam reflector 122. Light emitted from the high-beam headlight 120 has no cut-off line. The light emitted from the high-beam headlight 120 is emitted to the vehicle front side through the outer cover 102.

The high-beam heat dissipation plate 125 is a single plate-like member. The high-beam heat dissipation plate 125 is arranged in the cover 101 with a surface of the high-beam heat dissipation plate 125 facing the vehicle front side. The high-beam LED light source 121, the high-beam reflector 122, and the high-beam LED substrate 124; and the sub LED light source 131 R, the sub reflector 132R, and the sub LED substrate 134R are located at the front side of the high-beam heat dissipation plate 125. The high-beam LED substrate 124 having the high-beam LED light source 121 mounted thereon, and the high-beam reflector 122; and the sub LED substrate 134R having the sub LED light source 131 R mounted thereon, and the sub reflector 132R are supported on the high-beam heat dissipation plate 125. Thus, the high-beam heat dissipation plate 125 serves also as a heat dissipation plate of the sub headlight 130R. In other words, the high-beam heat dissipation plate 125 is integrated with the heat dissipation plate of the sub headlight 130R.

The high-beam heat sink 123 is located at the back side of the high-beam heat dissipation plate 125. The high-beam heat sink 123 is exposed to the outside of the cover 101 (see FIG. 3). The high-beam heat sink 123 is integrated with the high-beam heat dissipation plate 125. Thus, the high-beam heat sink 123 serves also as a heat sink (sub heat sink) of the sub headlight 130R. In other words, the high-beam heat sink 123 is integrated with the heat sink (sub heat sink) of the sub headlight 130R.

In the light unit 100, as described above, the high-beam heat sink 123, which serves also as the sub heat sink, is integrated with the sub reflector 132R (sub cut-off line producing part). Since the high-beam heat sink 123 serves also as the sub heat sink, heat conduction between the high-beam heat sink 123 and the sub heat sink is allowed. In other words, the high-beam heat sink 123 includes a part having a heat capacity for dissipating heat of the high-beam headlight 120 and a part having a heat capacity for dissipating heat of the sub headlight 130R, and heat conduction between these parts is allowed.

The high-beam reflector 122 and the sub reflector 132R are made of, for example, a resin. The high-beam heat sink 123 and the high-beam heat dissipation plate 125 are made of, for example, a metal (e.g., aluminum). The thermal conductivity of the high-beam heat sink 123 and the high-beam heat dissipation plate 125 is higher than that of the high-beam reflector 122 and the sub reflector 132R. The rigidity of the high-beam heat sink 123 and the high-beam heat dissipation plate 125 is higher than that of the high-beam reflector 122 and the sub reflector 132R. Therefore, heat generated in the high-beam LED light source 121, and the high-beam LED substrate 124; and the sub LED light source 131 R, and the sub LED substrate 134R is transferred to the high-beam heat sink 123 via the high-beam heat dissipation plate 125, and then dissipated from the high-beam heat sink 123.

In the high-beam heat dissipation plate 125, similarly to in the low-beam heat dissipation plate 115, a reference point 141, a vertical movement point 142, and a widthwise movement point 143 are provided. Since the position set points 141 to 143 provided on the high-beam heat dissipation plate 125 have the same configurations as those provided on the low-beam heat dissipation plate 115, a description thereof is omitted herein.

The lights 110, 120, and 130 are arranged such that the light sources 111, 121, and 131 are located on lower surfaces of the substrates 114, 124, and 134, respectively. The lights 110, 120, and 130 are arranged in such a manner that the LED substrates 114, 124, and 134 are inclined with a larger inclination angle relative to a horizontal line as the lean angle at which the lights 110, 120, and 130 are set to be turned on is larger. The lean angle at which the lights 110, 120, and 130 are set to be turned on increases in the order of the low-beam headlight 110 and the high-beam headlight 120, the sub headlights 130La and 130Ra, the sub headlights 130Lb and 130Rb, and the sub headlights 130Lc and 130Rc. Accordingly, the inclination angle of the LED substrates 114, 124, and 134 increases in the order of the substrates 114 and 124, the substrates 134La and 134Ra, the substrates 134Lb and 134Rb, and the substrates 134Lc and 134Rc. The lights 110 and 130L are integrated with the low-beam heat sink 113. In other words, the lights 110 and 130L are integrated with each other by the low-beam heat sink 113. In a physical sense, the lights 110 and 130L are not directly joined to each other.

FIG. 4 is a block diagram showing a basic configuration concerning the light unit 100 shown in FIG. 1.

The operation switch 15 includes the beam switch 15B and the flasher switch 15F. The beam switch 15B is connected to the high-beam headlight 120 and the low-beam headlight 110. When the rider operates the beam switch 15B, turn-on/turn-off of the high-beam headlight 120 and the low-beam headlight 110 is switched in accordance with the operation performed on the beam switch 15B.

The flasher switch 15F is connected to the flashers 14L and 14R. When the rider operates the flasher switch 15F, one of the flashers 14L and 14R is caused to flash in accordance with the operation performed on the flasher switch 15F.

In the motorcycle 10, a lean angle sensor 22 and a vehicle speed sensor 23 are provided. In this embodiment, the lean angle sensor 22 is a gyro sensor that detects the angular velocity about the front-back axis of the motorcycle 10. The lean angle sensor 22 supplies, to a controller 150, a signal indicating the detected angular velocity (roll rate) about the front-back axis. The vehicle speed sensor 23 detects the vehicle speed, and supplies, to the controller 150, a signal indicating the detected vehicle speed. Each time a predetermined timing comes during running, the controller 150 calculates the lean angle of the motorcycle 10 based on the angular velocity about the front-back axis and the vehicle speed.

In this embodiment, the roll rate is integrated over time, and the vehicle speed is used as correction information, thereby calculating the lean angle. However, in the present teaching, a method for calculating the lean angle is not limited to this example. In the calculation of the lean angle, the vehicle speed is not an essential variable. For calculating the lean angle, a conventionally known method is adoptable. For example, the calculation may be performed based on a static equilibrium equation by using the yaw rate (angular velocity about the vertical axis) and the vehicle speed. The correction information is not limited to the vehicle speed. For example, it may be acceptable to provide a plurality of gyro sensors and G sensors and use values obtained from these sensors and the vehicle speed as the correction information. Instead of the vehicle speed, GPS position information and/or geomagnetic information may be used as the correction information. No particular limitation is put on sensors (detection part) for detecting variables that are available for obtaining the lean angle. An appropriate sensor may be provided in accordance with variables available for the calculation.

The controller 150 includes a memory (not shown).

The memory stores, in the form of data, a reference value K(°) to be compared with the lean angle. In this embodiment, the memory stores three reference values (a reference value $K_1$, a reference value $K_2$, and a reference value $K_3$). The reference value $K_1$, the reference value $K_2$, and the reference value $K_3$ satisfy the relationship of [the reference value $K_1$ < the reference value $K_2$ < the reference value $K_3$]. The reference value $K_1$ is associated with the sub headlights 130La and 130Ra. The reference value $K_2$ is associated with the sub headlights 130Lb and 130Rb. The reference value $K_3$ is associated with the sub headlights 130Lc and 130Rc.

An answerback main unit 21 is connected to the controller 150. The answerback main unit 21 receives a signal radio wave from a remote control key 25.

The sub headlights 130La to 130Lc, 130Ra to 130Rc are connected to the controller 150. A power source 26 (battery) is connected to the high-beam headlight 120 and the low-beam headlight 110 via the beam switch 15B. The power source 26 is connected to the flashers 14L and 14R via the flasher switch 15F. The power source 26 is connected to the controller 150.

The controller 150 controls the brightness of the sub headlights 130La to 130Lc, 130Ra to 130Rc. In this embodiment, when the lean angle reaches a reference value while the vehicle is running, the controller 150 turns on the sub headlight 130 associated with the reference value. In this embodiment, a state where the controller 150 receives a running signal indicating that the motorcycle 10 is running from the vehicle speed sensor 23 or the like corresponds to a state where the vehicle is running. The running signal is, for example, a signal indicating the vehicle speed. The state where the vehicle is stopped is a state where the motorcycle 10 is stopped. A state where the controller 150 does not receive the running signal corresponds to the state where the vehicle is stopped. The state where the vehicle is stopped can occur irrespective of whether it is a state of idling or a state of engine stop. In this embodiment, the sub headlights 130La to 130Lc, 130Ra to 130Rc are LEDs. The controller 150 performs a pulse width modulation control (PWM control) to adjust the duty ratio, and thereby controls the brightness (light control). A method for performing the light control on the sub headlight is not particularly limited. For example, a current supplied to the sub headlight may be controlled, or a voltage supplied to the sub headlight may be controlled.

A harness 151 is connected to the controller 150. The harness 151 has, in an end portion thereof, a coupler 152. A diagnostic tool box 180 can be connected to the coupler 152. The diagnostic tool box 180 is connected to the coupler 152 at a time of, for example, check or adjustment of the motorcycle 10. Normally, the diagnostic tool box 180 is not connected during running. In this embodiment, the controller 150 is configured to, under a condition that the diagnostic tool box 180 is connected to the coupler 152, turn on the sub headlights 130L and 130R irrespective of the degree of inclination of the vehicle body when the vehicle is stopped. In this embodiment, it may be also acceptable that the sub headlights 130L and 130R are turned on in accordance with the degree of inclination of the vehicle body when the vehicle is stopped. The controller 150 may have a switch for turning on the sub headlight 130 when the vehicle is stopped. The controller 150 may be configured to, on a condition that a rider, an operator, or the like, makes a predetermined input when the vehicle is stopped, turn on the sub headlight 130 irrespective of or in accordance with the degree of inclination of the vehicle body. It may be also possible to change a wiring (not shown) between the sub headlight 130 and the power source 26 so that the sub headlight 130 is turned on when the vehicle is stopped. Thus, the main cut-off line producing part and the sub cut-off line producing part can be moved simultaneously by the movement mechanism while the main headlight and the sub headlight are turned on when the vehicle is stopped. Additionally, the heat sink is made of a material having a relatively high rigidity. Thus, when an operation for adjusting the positions of the main cut-off line producing part and the sub cut-off line producing part is performed, the main headlight and the sub headlight are deformed only to a small extent, and therefore an error is less likely to occur.

Although the low-beam headlight 110 includes the low-beam LED light source 111, the light source of the high-beam headlight 120 is not limited to an LED, and other examples thereof include an HID valve and a filament valve. One sub headlight may include a plurality of light sources having different brightnesses. In such a configuration, the light control on the sub headlight can be implemented by switching which light source is turned on. One sub headlight may include a plurality of light sources. In such a configuration, the light control on the sub headlight can be implemented by changing the number or combination of the light sources to be turned on. The brightnesses of the plurality of light sources may be either the same or different.

FIG. 5 is a front elevational view schematically showing optical axes and cut-off lines of light beams from the light unit 100 of the motorcycle 10 in an upright state.

The motorcycle 10 stands upright on a flat ground G. An optical axis $A_0$ of the low-beam headlight 110 is located below a horizontal line H of the low-beam headlight 110. A cut-off line $L_0$ of the low-beam headlight 110 is located above the optical axis $A_0$, and located below the horizontal line H of the low-beam headlight 110. The cut-off line $L_0$ extends right and left in the width direction of the vehicle. An illumination range of the low-beam headlight 110 covers both right and left sides with respect to the width direction of the vehicle. The horizontal line H of the low-beam headlight 110 means a horizontal line passing through the low-beam LED light source 111.

The optical axes $AL_1$ to $AL_3$ of the sub headlights 130La to 130Lc are located outward in the order of the optical axes $AL_1$ to $AL_3$ with respect to the width direction of the vehicle. The optical axes $AL_1$ to $AL_3$ of the sub headlights 130La to 130Lc are located above the optical axis $A_0$ of the low-beam headlight 110. Inclination angles $\theta_1$ to $\theta_3$ of the cut-off lines $LL_1$ to $LL_3$ of the sub headlights 130La to 130Lc increase in the order of the inclination angles $\theta_1$ to $\theta_3$. Except for whether the sub headlight lights are provided at the right side or the left side of the symmetry, the sub headlights 130Ra to 130Rc are identical to the sub headlights 130La to 130Lc described above. Therefore, a description thereof will be omitted.

The cut-off line is a bright-dark limit that occurs at the upper side of emitted light. The bright-dark limit can be recognized by, for example, visual observation. The bright-dark limit may have a certain thickness (width). The cut-off line is produced by, for example, blocking of an upper portion of light emitted from a light source to the vehicle front side. The light emitted from the light source to the vehicle front side includes light that is emitted to the vehicle front side without being reflected by a reflector and light that is emitted to the vehicle front side after being reflected by the reflector. In a screen light distribution, the cut-off line is produced at an upper edge of an illumination range. In a road-surface light distribution, the cut-off line is produced at an edge of an illumination range located at the side remote from the vehicle. The cut-off line is produced by a light block part (e.g., a shade) provided in a reflector. The light block part may be a member separate from the reflector. In such a case, the light block part corresponds to the cut-off line producing part. In a case where no light block part is provided and a bright-dark limit is produced by, for example, the shape of the reflector, the bright-dark limit corresponds to the cut-off line of the present teaching.

The cut-off line of the low-beam headlight extends in the width direction of the vehicle when the vehicle body is upright. The cut-off line of the low-beam headlight is, for example, substantially horizontal when the vehicle body is upright. The cut-off line of the low-beam headlight is, for example, located below the horizontal line of the low-beam headlight when the vehicle body is upright.

The cut-off line of the sub headlight extends obliquely when the vehicle body is upright. For example, when the vehicle body is upright, the cut-off line of the sub headlight extends from the lower and inner side with respect to the width direction of the vehicle toward the upper and outer side with respect to the width direction of the vehicle. Desirably, the cut-off line of the sub headlight is substantially horizontal when the sub headlight is turned on in accordance with the lean angle (for example, when the lean angle reaches the reference value).

Here, in the present teaching, the optical axis is a straight line that passes through a light source and the center of a maximum illuminance portion of emitted light. The center of the maximum illuminance portion of the emitted light can be identified by emitting light from a light source to a screen that is placed ahead of the light source. This screen illuminance test can be implemented by a method specified in JIS D1619. Also, the cut-off line and the illumination range having the predetermined illuminance can be identified based on a result (such as an isolux distribution map) of the screen illuminance test mentioned above. In the present teaching, the illumination range means an illumination range having a predetermined illuminance, and this illuminance is not particularly limited. The cut-off line and the illumination range having the predetermined illuminance in a plan view can be identified based on a road-surface light distribution that is obtained by converting the result of the screen illuminance test mentioned above into the road-surface light distribution. The conversion into the road-surface light distribution can be implemented by a conventionally known method. To be specific, through commonly-used drawing and geometric calculation, conversion from a screen illuminance value into a road-surface illuminance value can be performed. In such a case, the following expression (I) is usable. In the following expression (I), D represents a light source, E represents a point on a road surface, and F represents a point of intersection at which the screen placed between D and E intersects with a straight line connecting D to E.

$$\text{Road-Surface Illuminance (Lx)} = \text{Screen Illuminance (Lx)} \times [(\text{Distance between D and F (m)}) / (\text{Distance between D and E (m)})]^2 \qquad \dots \text{(I)}$$

As shown in the expression (I), the road surface illuminance is inversely proportional to the square of the distance between the light source and the road surface. Therefore, an area on the road surface distant from the motorcycle 10 is less easily brightened by the light emitted from the motorcycle 10. In order to brightly illuminate an area on the road surface distant from the motorcycle 10, it is preferable that a portion having a high screen illuminance is generated below and near the horizontal line. A region below and near the cut-off line (that is, an upper edge portion of the emitted light) is relatively bright. Accordingly, locating the cut-off line at a position below and near the horizontal line can produce a portion having a high screen illuminance at a position below and near the horizontal line. This can ensure the visibility over a road surface at a long distance. Locating the cut-off line at a position above the horizontal line causes a problem of dazzling. Thus, by accurately adjusting the cut-off line, the visibility over a road surface at a long distance can be ensured with suppression of dazzling.

In this embodiment, the rigidity of the heat sink can be used to improve the accuracy in manufacturing the main headlight and the sub headlight, and thereby the accuracy of the position of the cut-off line can be improved. Accordingly, the visibility over a road surface at a long distance can be ensured, and additionally dazzling can be suppressed.

Next, a change in a screen light distribution of the headlight in accordance with the lean angle of the motorcycle 10 will be described with reference to FIGS. 6(a) to (c).

When the lean angle of the motorcycle 10 reaches the reference value $K_1$, the sub headlight 130La is turned on. As shown in FIG. 6(a), the illumination ranges LB and $LS_1$ are inclined downward to the left. The cut-off line $LL_1$ of the sub headlight 130La is located below a horizontal line $HL_1$ of the sub headlight 130La (a horizontal line passing through the sub LED light source 131La). The cut-off line $LL_1$ is substantially horizontal. The illumination range $LS_1$ of the sub headlight 130La is located in a space below the horizontal line $HL_1$.

Then, when the lean angle of the motorcycle 10 reaches the reference value $K_2$, the sub headlight 130Lb is turned on under a state where the sub headlight 130La is turned on. As shown in FIG. 6(b), the illumination ranges LB, $LS_1$, and $LS_2$ are inclined downward to the left. The cut-off line $LL_2$ of the sub headlight 130Lb is located below a horizontal line $HL_2$ of the sub headlight 130Lb (a horizontal line passing through the sub LED light source 131 Lb). The cut-off line $LL_2$ is substantially horizontal. The illumination range $LS_2$ of the sub headlight 130Lb is located in a space below the horizontal line $HL_2$.

Then, when the lean angle of the motorcycle 10 reaches the reference value $K_3$, the sub headlight 130Lc is turned on under a state where the sub headlights 130La and 130Lb are turned on. As shown in FIG. 6(c), the illumination ranges LB, $LS_1$ to $LS_3$ are inclined downward to the left. The cut-off line $LL_3$ of the sub headlight 130Lc is located below a horizontal line $HL_3$ of the sub headlight 130Lc (a horizontal line passing through the sub LED light source 131Lc). The cut-off line $LL_3$ is substantially horizontal. The illumination range $LS_3$ of the sub headlight 130Lc is located in a space below the horizontal line $HL_3$.

As shown in FIGS. 6(a) to (c), when the sub headlight 130 is turned on in accordance with the lean angle, the illumination range LS of the sub headlight 130 newly appears. The illumination range LS of the sub headlight 130 has the cut-off line LL, and the brightness largely changes at the cut-off line LL as a boundary. Thus, dazzling to an oncoming vehicle or the like may occur if the cut-off line LL is located above the horizontal line when the sub headlight 130 is turned on.

In this respect, in the light unit disclosed in JP 4864562, it is not easy to satisfy a demanded accuracy of the positional relationship between cut-off lines. Therefore, for the reliable prevention of dazzling, the distance between a horizontal line of a sub headlight at a time when the sub headlight is turned on and the cut-off line located below the horizontal line needs to be increased taking into account a dimensional error that may occur during a manufacturing process. However, if the cut-off line LL is located considerably below the horizontal line when the sub headlight is turned on, the visibility over a road surface at a long distance decreases. That is, JP 4864562 aims to achieve both suppression of dazzling to an oncoming vehicle or the like and suppression of decrease in the visibility over the road surface at a long distance while the vehicle is running on a curve, but achievement of both of them is difficult taking into account a manufacturing error.

On the other hand, the light unit 100 allows the low-beam reflector 112 and the sub reflector 132L to be accurately manufactured together with the low-beam heat sink 113 serving as the sub heat sink. Therefore, the distance between the horizontal line of the sub headlight 130 caused when the sub headlight 130 is turned on and the cut-off line LL thereof located below the horizontal line can be shortened. This can provide the light unit 100 that is easy to manufacture and that achieves both suppression of dazzling to an oncoming vehicle or the like and suppression of decrease in the visibility over a road surface at a long distance even while the motorcycle 10 is running on a curve. Additionally, since suppression of decrease in the visibility over a road surface at a long distance is achieved with suppression of dazzling to an oncoming vehicle or the like, an LED having a higher brightness (an LED having a higher output) is adoptable as the sub LED light source.

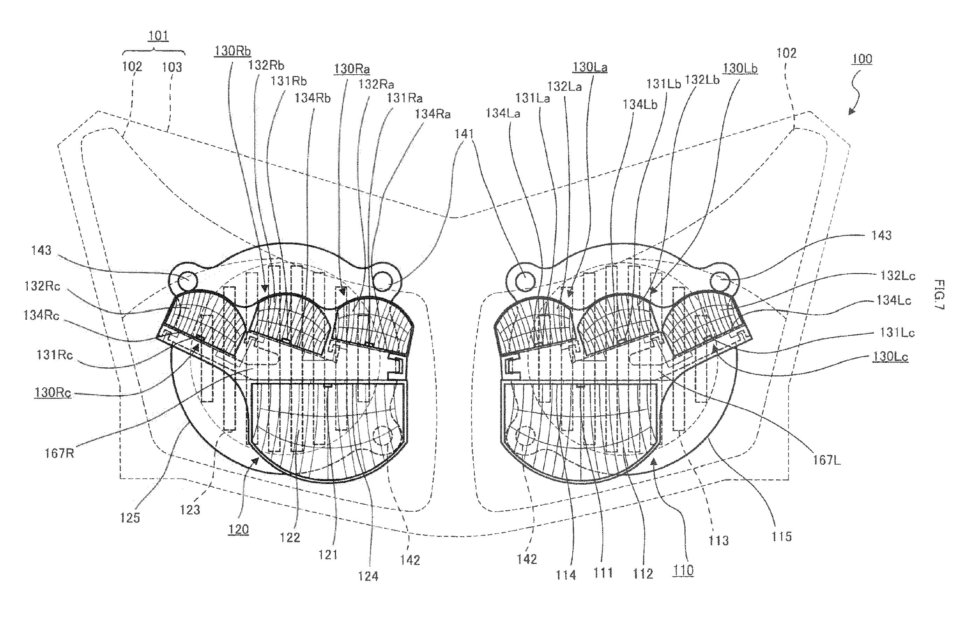

Next, second to fourth embodiments will be described with reference to FIGS. 7 to 9. In FIGS. 7 to 9, parts corresponding to the parts shown in FIGS. 1 to 3 are given the same reference numerals as those given on FIGS. 1 to 3.

<Second Embodiment>

FIG. 7 is a front elevational view schematically showing a light unit 100 according to a second embodiment.

In the light unit 100 shown in FIG. 7, similarly to the first embodiment, the low-beam headlight 110 is integrated with the sub headlights 130L arranged at one side (left side) with respect to the width direction of the vehicle, and the high-beam headlight 120 is integrated with the sub headlights 130R arranged at one side (right side) with respect to the width direction of the vehicle.

In the light unit 100 shown in FIG. 7, the sub headlights 130L are aligned in the width direction of the vehicle at a location above the low-beam headlight 110. The sub headlights 130La to 130Lc are arranged in this order from the inner side with respect to the width direction of the vehicle. In accordance with an increase in the lean angle, the sub headlights 130La to 130Lc are turned on sequentially from the sub headlight arranged innermost with respect to the width direction of the vehicle. The sub headlights 130R and the sub headlights 130L are laterally symmetrical.

The lights 110 and 120 are arranged such that the light sources 111 and 121 are located on lower surfaces of the substrates 114 and 124, respectively. The sub headlights 130 are arranged such that the sub LED light sources 131 are located on upper surfaces of the sub LED substrates 134. Thus, in the lights 110 and 130L, a support member 167L for supporting both of the substrates 114 and 134L is provided between the substrates 114 and 134L. In the lights 120 and 130R, a support member 167R for supporting both of the substrates 124 and 134R is provided between the substrates 124 and 134R.

The position set points 141 to 143 are provided on each of the low-beam heat dissipation plate 115 and the high-beam heat dissipation plate 125. The reference point 141 provided on the low-beam heat dissipation plate 115 is closest to the sub headlight 130La. The widthwise movement point 143 provided on the low-beam heat dissipation plate 115 is closest to the sub headlight 130Lc. A straight line (not shown) connecting the reference point 141 to the vertical movement point 142 and a straight line (not shown) connecting the reference point 141 to the widthwise movement point 143 overlap the low-beam heat sink 113.

<Third Embodiment>

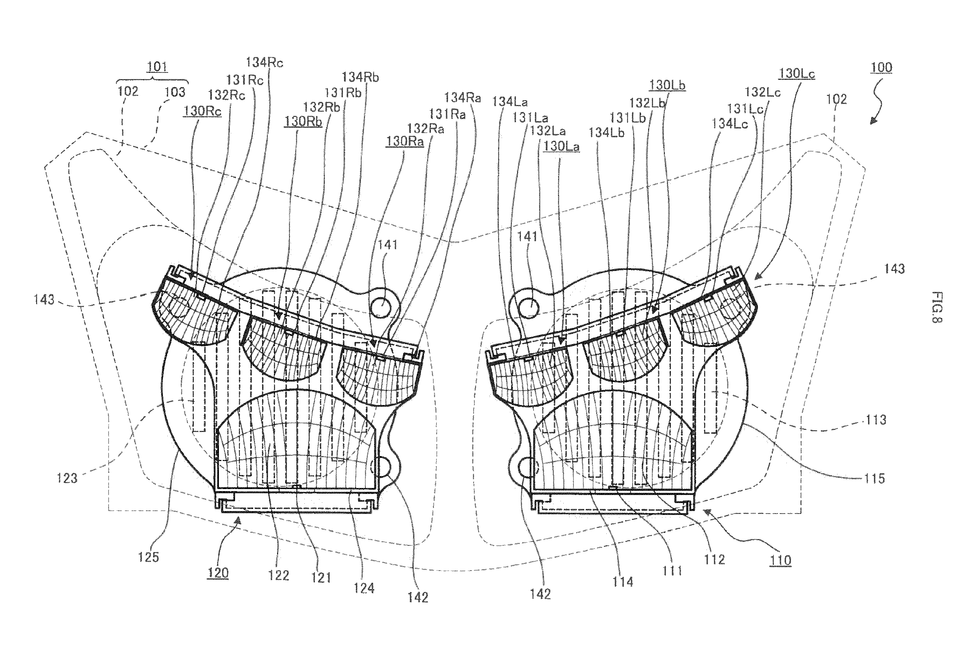

FIG. 8 is a front elevational view schematically showing a light unit 100 according to a third embodiment.

In the light unit 100 shown in FIG. 8, similarly to the first and second embodiments, the low-beam headlight 110 is integrated with the sub headlight 130L arranged at one side (left side) with respect to the width direction of the vehicle, and the high-beam headlight 120 is integrated with the sub headlights 130R arranged at one side (right side) with respect to the width direction of the vehicle.

In the light unit 100 shown in FIG. 8, the sub headlights 130L (130La to 130Lc) are located above the low-beam headlight 110 and arranged in this order toward the upper and outer side with respect to the width direction of the vehicle. In accordance with an increase in the lean angle, the sub headlights 130La to 130Lc are turned on sequentially from the sub headlight arranged lowermost and innermost with respect to the width direction of the vehicle. The sub headlights 130R and the sub headlights 130L are laterally symmetrical.

The lights 110 and 120 are arranged such that the light sources 111 and 121 are located on upper surfaces of the substrates 114 and 124, respectively. The sub headlights 130 are arranged such that the sub LED light sources 131 are located on lower surfaces of the sub LED substrates 134. Thus, in the lights 110 and 130L, the reflectors 112 and 132L are formed as a single member. In the lights 120 and 130R, the reflectors 112 and 132R are formed as a single member.

The position set points 141 to 143 are provided on each of the low-beam heat dissipation plate 115 and the high-beam heat dissipation plate 125. The reference point 141 provided on the low-beam heat dissipation plate 115 is closest to the sub headlight 130La. The widthwise movement point 143 provided on the low-beam heat dissipation plate 115 is closest to the sub headlight 130Lc. A straight line (not shown) connecting the reference point 141 to the vertical movement point 142 and a straight line (not shown) connecting the reference point 141 to the widthwise movement point 143 overlap the low-beam heat sink 113.

<Fourth Embodiment>

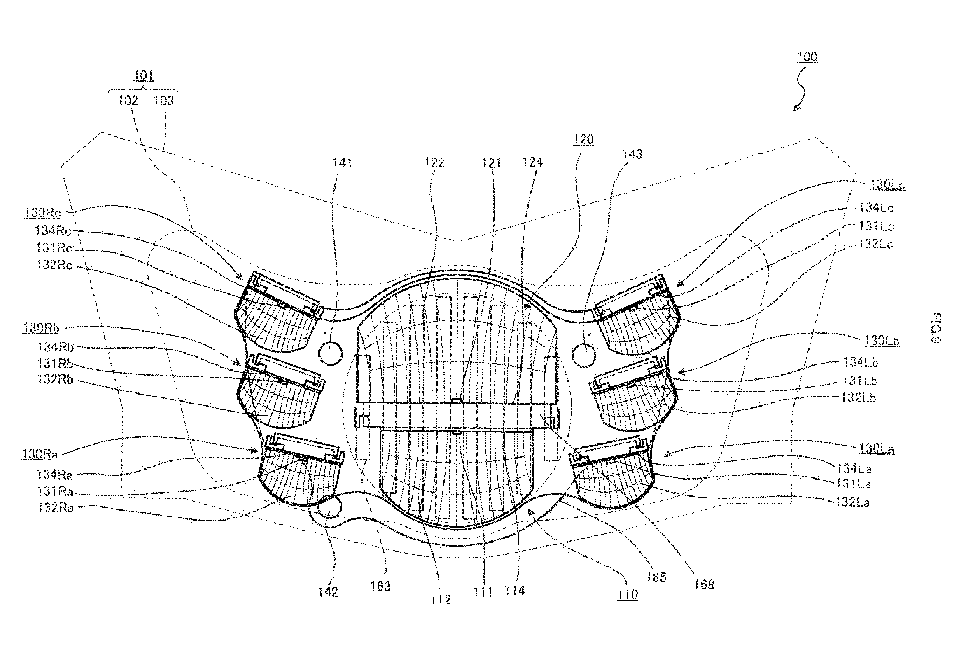

FIG. 9 is a front elevational view schematically showing a light unit 100 according to a fourth embodiment.

In the light unit 100 shown in FIG. 9, the outer cover 102 is shaped so as to extend across opposite sides with respect to the width direction of the vehicle. In the light unit 100, the low-beam headlight 110 and the high-beam headlight 120 have a main heat sink 163. The main heat sink 163 serves also as heat sinks of the sub headlights 130. The main heat sink 163 is integrated with the sub reflectors 132.

The substrates 114, 124, 134 having the light sources 111, 121, 131 of the lights 110, 120, 130, and the reflectors 112, 122, 132, are arranged on a front surface of a main heat dissipation plate 165. The main heat sink 163 is arranged on a back surface of the main heat dissipation plate 165.

The sub headlights 130L, which are aligned in the vertical direction, are arranged at one side (left side) with respect to the width direction of the vehicle. The sub headlight 130R, which are aligned in the vertical direction, are arranged at one side (right side) with respect to the width direction of the vehicle. In accordance with an increase in the lean angle, the sub headlights 130L are turned on sequentially from the sub headlight arranged lowermost. The low-beam headlight 110 and the high-beam headlight 120 are arranged between the sub headlights 130L and the sub headlights 130R.

The light 110 is arranged such that the light source 111 is located on a lower surface of the substrate 114. The light 120 is arranged such that the light source 121 is located on an upper surface of the substrate 124. Thus, a support member 168 for supporting both of the substrates 114 and 124 is provided between the substrate 114 and the substrate 124.

With respect to the width direction of the vehicle, the reference point 141 and the vertical movement point 142 are provided between the main headlight (the low-beam headlight 110 and the high-beam headlight 120) and the sub headlights 130R arranged at one side (right side) with respect to the width direction of the vehicle. The reference point 141 and the vertical movement point 142 line up in the vertical direction. With respect to the width direction of the vehicle, the widthwise movement point 143 is provided between the main headlight (the low-beam headlight 110 and the high-beam headlight 120) and the sub headlights 130L arranged at one side (left side) with respect to the width direction of the vehicle. The reference point 141 and the widthwise movement point 143 line up in the width direction of the vehicle.

The position set points 141 to 143 are provided on the main heat dissipation plate 165. The vertical movement point 142 is closest to the sub headlight 130Ra. The widthwise movement point 143 is closest to the sub headlight 130Lc. A straight line (not shown) connecting the reference point 141 to the widthwise movement point 143 overlaps the main heat sink 163.

Although the first to fourth embodiments have been described, the present teaching is not limited to these embodiments. In the present teaching, it suffices that at least one of the main headlights and at least one of the sub headlights satisfy the following requirements (A) to (D).

(A) The main heat sink is provided integrally with the main cut-off line producing part.
(B) The sub heat sink is provided integrally with the sub cut-off line producing part.
(C) The sub heat sink is provided integrally with the main heat sink such that heat conduction between the sub heat sink and the main heat sink is allowed.
(D) The main cut-off line producing part and the sub cut-off line producing part are provided in such a manner that the main cut-off line producing part and the sub cut-off line producing part are allowed to move simultaneously under a state where the fixed part is fixed to the vehicle body.

In the present teaching, it may be acceptable that the sub heat sink, the sub LED light source, and the sub cut-off line producing part are manufactured separately from the main heat sink, the main LED light source, and the main cut-off line producing part, and then integrated with the main heat sink, the main LED light source, and the main cut-off line producing part. It may be also acceptable that the main heat sink, the sub heat sink, the main LED light source, and the sub LED light source are manufactured separately from the main cut-off line producing part and the sub cut-off line producing part, and then integrated with the main cut-off line producing part and the sub cut-off line producing part. A process step for the integration is not particularly limited.

In the light unit of the present teaching, it may not be always necessary that all the lights are integrated. In a possible example, the main headlight (the low-beam headlight and/or the high-beam headlight) and the sub headlight arranged at one side with respect to the width direction of the vehicle are integrated into a unit while the main headlight (the low-beam headlight and/or the high-beam headlight) and the sub headlight arranged at the other side with respect to the width direction of the vehicle are integrated into a unit.

In such a configuration, if the unit by itself satisfies the requirements (A) to (D), the unit solely corresponds to the light unit of the present teaching. In other words, it may not be always necessary that the light unit includes all of the main headlight and the sub headlights provided in a single vehicle that leans into turns. In the present teaching, each of the low-beam headlight and the high-beam headlight may be of single lamp type or of multiple lamp type (for example, two lamp type). It may be acceptable that the light unit includes a light other than the main headlight and the sub headlight (for example, a flasher (direction indicator) or a position light (side lamp)).

In these embodiments, the lean angle is the angle of inclination of the vehicle body to the inner side of a curve relative to the upright state (vertical direction). However, the present teaching is not limited to this example. The lean angle may be the angle of inclination of the vehicle body to the inner side of a curve relative to a direction perpendicular to a road surface. As a method and a device for measuring the angle of inclination of the vehicle body to the inner side of a curve relative to the direction perpendicular to the road surface, conventionally known ones are adoptable.

In the present teaching, no particular limitation is put on the number of sub headlights. The number of sub headlights configured to illuminate one side with respect to the width direction of the vehicle may be one, or may be two or more. The number of sub LED light sources included in a single sub headlight may be one, or may be two or more.

In the present teaching, the sub headlight may be configured such that a turn-on function in accordance with the lean angle is activated or deactivated by hand. To be specific, the function may be put into a stand-by state by hand, and under the stand-by state, the sub headlight may be turned on in accordance with the lean angle. In this case as well, the sub headlight is turned on not by hand but in accordance with the lean angle. Instead, the sub headlight may be configured such that an instruction for turn-on or turn-off is inputted by hand. In such a case, when the instruction is not inputted, the brightness of the sub headlight is changed in accordance with the lean angle, while when the instruction is inputted, turn-on or turn-off is performed in accordance with the instruction. In this case as well, the sub headlight has a function of being turned on in accordance with the lean angle. The sub headlight may be configured such that it is not turned on in accordance with the lean angle in a relatively well-lit situation, for example, in daytime, while it is turned on in accordance with the lean angle in a relatively dark situation, for example, at night. In either case, the sub headlight is different from the main headlight and the flasher, in that the sub headlight has a function of being turned on in accordance with the lean angle.

The present teaching can adopt the following configurations. The above-described embodiments are merely examples of the present teaching.

(A) The light unit according to any one of (1) to (6) described above, wherein
the light unit includes a movement mechanism configured to simultaneously move the main cut-off line producing part, the sub cut-off line producing part, the main heat sink, and the sub heat sink relative to the vehicle body under a state where the fixed part is fixed to the vehicle body,
the movement mechanism is configured to simultaneously move the main cut-off line producing part, the sub cut-off line producing part, the main heat sink, and the sub heat sink, such that the cut-off line produced by the sub cut-off line producing part at a time point when the sub headlight is turned on in accordance with the lean angle of the vehicle is brought close to a predefined target position.
The target position may be, for example, a position below and near a horizontal line, or may be a position on the horizontal line.
In the configuration of (A), suppression of dazzling to an oncoming vehicle or the like and suppression of decrease in the visibility over a road surface at a long distance are achieved at a higher level.
(B) The light unit according to (A) described above, wherein
the movement mechanism is configured to move the cut-off line produced by the main cut-off line producing part and the cut-off line produced by the sub cut-off line producing part in the vertical direction and in the width direction of the vehicle on a screen light distribution.
(C) The light unit according to (A) described above, wherein
the movement mechanism is configured to simultaneously move the main cut-off line producing part, the sub cut-off line producing part, the main heat sink, and the sub heat sink, to thereby cause the cut-off line produced by the main cut-off line producing part to move toward a predefined reference position, such that the cut-off line produced by the sub cut-off line producing part is brought close to the predefined target position.

The reference position may be, for example, a position below and near a horizontal line. The target position is as described in the (A) above.

The configuration of (C) is able to adjust the cut-off lines of the low-beam headlight and the sub headlight in an efficient manner.

[DESCRIPTION OF THE REFERENCE SIGNS]

| 10 | motorcycle (vehicle that leans into turns) |
| 14L, 14R | flasher |
| 15 | operation switch |
| 16 | front wheel |

| | |
|---|---|
| 17 | front fork |
| 18 | front cover |
| 19 | handlebar |
| 22 | lean angle sensor |
| 23 | vehicle speed sensor |
| 30 | stay |
| 100 | light unit |
| 101 | cover (fixed part) |
| 102 | outer cover |
| 103 | rear cover |
| 104 | attachment part |
| 105 | rubber boot part |
| 110 | low-beam headlight (main headlight) |
| 111 | low-beam LED light source (main LED light source) |
| 112 | low-beam reflector (main cut-off line producing part) |
| 113 | low-beam heat sink (main heat sink) |
| 114 | low-beam LED substrate |
| 115 | low-beam heat dissipation plate |
| 116 | low beam transparent surface |
| 120 | high-beam headlight (main headlight) |
| 121 | high-beam LED light source |
| 122 | high-beam reflector |
| 123 | high-beam heat sink |
| 124 | high-beam LED substrate |
| 125 | high-beam heat dissipation plate |
| 126 | high beam transparent surface |
| 130 (130La to 130Lc, 130Ra to 130Rc) | sub headlight |
| 131 (131La to 131Lc, 131Ra to 131Rc) | sub LED light source |
| 132 (132La to 132Lc, 132Ra to 132Rc) | sub reflector (sub cut-off line producing part) |

| 134 (134La to 134Lc, 134Ra to 134Rc) | sub LED substrate |
| 136 (136La to 136Lc, 136Ra to 136Rc) | sub transparent surface |
| 140 | movement mechanism |
| 141 | reference point (position set point) |
| 141a | boss portion |
| 141b | threaded shaft |
| 141c | ball portion |
| 141d | ball bearing portion |
| 142 | vertical movement point (position set point) |
| 142a | aiming bolt |
| 142b | aiming nut |
| 143 | widthwise movement point (position set point) |
| 150 | controller |
| 163 | main heat sink |
| 165 | main heat dissipation plate |
| 167 (167L, 167R) | support member |

## Claims

1. A light unit for use in a vehicle that leans into turns, the light unit comprising:

a fixed part (101) fixed to a vehicle body that is allowed to lean while the vehicle is running;
a main headlight (110,120) provided in the fixed part (101) and configured to be turned on irrespective of a lean angle of the vehicle; and
a sub headlight (130) provided in the fixed part (101) and configured to be turned on in accordance with the lean angle of the vehicle while the vehicle is running,
the main headlight (110,120) including a main LED light source (111), a main cut-off line producing part (112), and a main heat sink (113,163), the main cut-off line producing part (112) being configured to produce a cut-off line at the upper side of light emitted from the main LED light source (111), the cut-off line extending in a width direction of the vehicle when the vehicle body is upright, the main heat sink (113,163) being configured to dissipate heat of the main LED light source (111), the sub headlight (130) including a sub LED light source (131), a sub cut-off line producing part (132), and a sub heat sink (113,123), the sub cut-off line producing part (132) being configured to produce a cut-off line at the upper side of light emitted from the sub LED light source (131), the cut-off line extending obliquely when the vehicle body is upright, the sub heat sink (113,123) being configured to dissipate heat of the sub LED light source (131),
the main heat sink (113,163) being provided integrally with the main cut-off line producing part (112),
the sub heat sink (113,123) being provided integrally with the sub cut-off line producing part (132),
the sub heat sink (113,123) being provided integrally with the main heat sink (113,163) such that heat conduction between the sub heat sink (113,123) and the main heat sink (113,163) is allowed,
the main cut-off line producing part (112) and the sub cut-off line producing part (132) being provided in such a manner that the main cut-off line producing part (112) and the sub cut-off line producing part (132) are allowed to move simultaneously under a state where the fixed part (101) is fixed to the vehicle body.

2.  A light unit according to claim 1, wherein the light unit includes a movement mechanism (140), the movement mechanism (140) being configured to simultaneously move the main cut-off line producing part (112), the sub cut-off line producing part (132), the main heat sink (113,163), and the sub heat sink (113,123) relative to the vehicle body under a state where the fixed part (101) is fixed to the vehicle body,

the movement mechanism (140) has a plurality of position set points (141,142,143) for setting positions, after the movement, of the main cut-off line producing part (112), the sub cut-off line producing part (132), the main heat sink (113,163), and the sub heat sink (113,123).

3.  A light unit according to claim 2, wherein at least one of the plurality of position set points (141,142,143) is provided in a portion that is provided integrally with the sub heat sink (113,123) such that heat conduction with the sub heat sink (113,123) is allowed.

4.  A light unit according to claim 2 or 3, wherein in a front elevational view of the light unit, at least one of the plurality of position set points (141,142,143) is located closest to, among transparent surfaces (116,126) of lights included in the light unit, a transparent surface (136) of the sub headlight (130).

5.  A light unit according to any one of claims 2 to 4, wherein in a front elevational view of the light unit, at least one of the plurality of position set points (141,142,143) overlaps a transparent surface (136) of the sub headlight (130).

6.  A light unit according to any one of claims 2 to 5, wherein the plurality of position set points (141,142,143) include a reference point serving as a reference for movement and at least one movement point that is movable relative to the reference point, in a front elevational view of the vehicle, at least one straight line among straight lines connecting the reference point to the movement points overlaps the main heat sink (113,163).

7.  A vehicle that leans into turns, the vehicle comprising the light unit according to any one of claims 1 to 6.

FIG.1

FIG.2

FIG.3

EP 2 792 546 A1

FIG.4

| | |
|---|---|
| FLASHER SWITCH | 15F |
| BEAM SWITCH | 15B |

15

LEFT FLASHER — 14L

RIGHT FLASHER — 14R

HIGH BEAM HEADLIGHT — 120

POWER SOURCE — 26

LOW BEAM HEADLIGHT — 110

SUB HEADLIGHT — 130La

LEAN ANGLE SENSOR — 22

SUB HEADLIGHT — 130Lb

SUB HEADLIGHT — 130Lc

VEHICLE SPEED SENSOR

CONTROLLER

SUB HEADLIGHT — 130Ra

SUB HEADLIGHT — 130Rb

ANSWERBACK MAIN UNIT (COMMUNICATION DEVICE / CONTROL UNIT)

SUB HEADLIGHT — 130Rc

23    21

REMOTE CONTROL KEY — 25

150    COUPLER    151
              152

10  100

DIAGNOSTIC TOOL BOX — 180

FIG.5

FIG.6

(a)

$HL_1$ ................................ $HL_1$

$LL_1$  $L_0$

$LS_1$

$LB$ ———————————— G

(c)

(b)

$HL_2$ ................................ $HL_2$

$LL_2$  $LL_1$  $L_0$

$LS_2$

$LS_1$

$LB$

———————————— G

(c)

$HL_3$ ................................ $HL_3$

$LL_3$  $LL_2$  $LL_1$  $L_0$

$LS_3$

$LS_2$  $LS_1$

$LB$ ———————————— G

10

FIG.7

FIG.8

FIG.9

Europäisches
Patentamt

European
Patent Office

Office européen
des brevets

**EUROPEAN SEARCH REPORT**

Application Number

EP 14 15 6444

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 2 489 549 A1 (VALEO VISION [FR]) 22 August 2012 (2012-08-22) * claims 1,2,4; figures 1-8 * * paragraphs [0025] - [0055] * ----- | 1-7 | INV. B60Q1/068 B62J6/02 F21S8/10 B60Q1/18 |
| Y | WO 2010/061651 A1 (YAMAHA MOTOR CO LTD [JP]; OOBA JUNICHI [JP]) 3 June 2010 (2010-06-03) * abstract; figure 14 * ----- | 1-7 | |
| A | DE 10 2007 013309 A1 (HONDA MOTOR CO LTD [JP]) 27 September 2007 (2007-09-27) * abstract; figure 5 * ----- | 1-7 | |
| A | FR 2 853 717 A1 (KOITO MFG CO LTD [JP]) 15 October 2004 (2004-10-15) * abstract; figures 1-9 * ----- | 1-7 | |
| A | EP 2 570 716 A1 (VALEO VISION [FR]) 20 March 2013 (2013-03-20) * abstract; figure 5 * ----- | 1-7 | TECHNICAL FIELDS SEARCHED (IPC) B60Q B62J F21S |

The present search report has been drawn up for all claims

| Place of search | Date of completion of the search | Examiner |
|---|---|---|
| Munich | 14 August 2014 | Giraud, Pierre |

EPO FORM 1503 03.82 (P04C01)

**ANNEX TO THE EUROPEAN SEARCH REPORT
ON EUROPEAN PATENT APPLICATION NO.**

EP 14 15 6444

This annex lists the patent family members relating to the patent documents cited in the above-mentioned European search report.
The members are as contained in the European Patent Office EDP file on
The European Patent Office is in no way liable for these particulars which are merely given for the purpose of information.

14-08-2014

| Patent document cited in search report | | Publication date | Patent family member(s) | | Publication date |
|---|---|---|---|---|---|
| EP 2489549 | A1 | 22-08-2012 | EP | 2489549 A1 | 22-08-2012 |
| | | | FR | 2971481 A1 | 17-08-2012 |
| | | | JP | 2012166781 A | 06-09-2012 |
| WO 2010061651 | A1 | 03-06-2010 | JP | 5249350 B2 | 31-07-2013 |
| | | | JP | 2013032154 A | 14-02-2013 |
| | | | WO | 2010061651 A1 | 03-06-2010 |
| DE 102007013309 | A1 | 27-09-2007 | DE | 102007013309 A1 | 27-09-2007 |
| | | | JP | 4616200 B2 | 19-01-2011 |
| | | | JP | 2007257951 A | 04-10-2007 |
| FR 2853717 | A1 | 15-10-2004 | CN | 1536264 A | 13-10-2004 |
| | | | DE | 102004017454 A1 | 05-01-2005 |
| | | | FR | 2853717 A1 | 15-10-2004 |
| | | | GB | 2402203 A | 01-12-2004 |
| | | | JP | 4102240 B2 | 18-06-2008 |
| | | | JP | 2004311224 A | 04-11-2004 |
| | | | KR | 20040087886 A | 15-10-2004 |
| | | | US | 2004202007 A1 | 14-10-2004 |
| EP 2570716 | A1 | 20-03-2013 | EP | 2570716 A1 | 20-03-2013 |
| | | | FR | 2979970 A1 | 15-03-2013 |

EPO FORM P0459

**EP 2 792 546 A1**

**Patent documents cited in the description**

- JP 4864562 B